Europäisches Patentamt

European Patent Office

Office européen des brevets

(11) Numéro de publication : **0 334 724 B1**

(12) **FASCICULE DE BREVET EUROPEEN**

(45) Date de publication du fascicule du brevet :
06.05.92 Bulletin 92/19

(51) Int. Cl.⁵ : **F16D 65/22**

(21) Numéro de dépôt : **89400718.6**

(22) Date de dépôt : **15.03.89**

(54) **Mécanisme d'actionnement de frein à tambour à commande par coin et frein à tambour comprenant un tel mécanisme.**

(30) Priorité : **25.03.88 FR 8803913**

(43) Date de publication de la demande :
**27.09.89 Bulletin 89/39**

(45) Mention de la délivrance du brevet :
**06.05.92 Bulletin 92/19**

(84) Etats contractants désignés :
**DE ES FR IT**

(56) Documents cités :
**EP-A- 0 201 139**
**BE-A- 646 739**

(56) Documents cités :
**FR-A- 2 202 561**
**FR-A- 2 296 794**
**FR-A- 2 602 289**
**GB-A- 2 074 671**
**US-A- 1 940 469**

(73) Titulaire : **BENDIX EUROPE Services Techniques S.A.**
**126 rue de Stalingrad**
**F-93700 Drancy (FR)**

(72) Inventeur : **Deaumautis, Chantal Bendix France**
**Division Technique 126, rue de Stalingrad**
**F-93700 Drancy (FR)**

Jouve, 18, rue Saint-Denis, 75001 PARIS

# Description

La présente invention concerne un mécanisme d'actionnement de frein à tambour à commande par coin et un frein à tambour comprenant un tel mécanisme d'actionnement.

Comme bien connu, les freins à tambour à commande par coin comprennent deux segments incurvés munis de garnitures de freinage, les deux segments étant montés mobiles sur un plateau solidaire de la fusée de roue, ou du pont de roue.

A une extrémité, les deux segments sont articulés sur une butée fixe et, à leur autre extrémité, les deux segments sont attaqués par le mécanisme d'actionnement qui les repousse afin de forcer les garnitures en engagement de friction contre la surface cylindrique interne du tambour fixé à la roue, en vue du freinage du véhicule.

Le mécanisme d'actionnement comprend un corps fixe dans lequel coulissent deux pistons opposés, chacun engageant l'un des segments à son extrémité externe, tandis que les extrémités internes des pistons coopèrent avec un coin mobile transversalement par rapport à l'axe des pistons afin de repousser les pistons et, par conséquent, les segments en engagement avec le tambour.

Comme connu, ces freins comportent un dispositif élastique de rappel des segments destiné à les écarter du tambour lors du relâchement du freinage, c'est-à-dire le retrait du coin, et un dispositif de rattrapage d'usure destiné à maintenir une garde à peu près constante entre les garnitures et le tambour au fur et à mesure de l'usure des garnitures.

Eu égard au sens de rotation de la roue, donc du tambour, les deux segments se comportent différemment lors du freinage : le segment qui est sollicité par le tambour en direction de la butée d'articulation est dit segment "comprimé", tandis que le segment qui est tiré par le tambour en écartement de la butée d'articulation est dit segment "tendu".

Dans un frein à commande par coin conventionnelle, la compression du segment comprimé est amplifiée par le fait que le coin lui-même transmet au segment comprimé l'effort qu'il reçoit du segment tendu lors du freinage.

L'usure de la garniture du segment comprimé est par conséquent nettement plus rapide que celle du segment tendu, et par conséquent, lors du remplacement des garnitures, on est amené à remplacer également la garniture du segment tendu malgré sa moindre usure.

On connaît des documents EP-A-0 201 139 ou FR-A-2 602 289 une solution destinée à éviter une telle transmission de l'effort du segment tendu vers le segment comprimé, afin de rendre les usures des deux garnitures à peu près égales et donc permettre d'espacer les remplacements des garnitures. Cette solution consiste à ménager sur le coin et sur le corps du mécanisme deux surfaces en vis-à-vis parallèles entre elles et perpendiculaires à l'axe des pistons et à interposer entre ces surfaces un ou plusieurs rouleaux destinés à transférer du coin au corps les efforts exercés par l'un des segments sur le coin.

Ainsi, on évite une amplification de l'effort exercé sur le segment comprimé et l'on peut maintenir une certaine égalité entre les usures des deux garnitures.

Cette solution est toutefois extrêmement délicate à mettre en oeuvre compte tenu du peu de place disponible dans le corps du mécanisme d'actionnement. En effet, des efforts importants sont transmis suivant des surfaces très réduites le long des génératrices des rouleaux, ce qui provoque un matage des surfaces en vis-à-vis et l'apparition de jeux indésirables.

De plus, ces surfaces sont nécessairement situées de part et d'autre des surfaces inclinées par lesquelles le coin coopère avec les pistons et ne peuvent avoir qu'une faible largeur sans augmenter l'encombrement du corps. Les rouleaux sont par conséquent très courts et doivent être réalisés en matériaux spéciaux pour transmettre des efforts importants.

Afin de pallier ces inconvénients, la présente invention concerne une solution dans laquelle le coin comporte, de part et d'autre des surfaces inclinées coopérant avec les pistons, deux prolongements à faces parallèles et perpendiculaires à l'axe des pistons et le corps comporte deux rainures de guidage perpendiculaires à l'axe des pistons, les deux prolongements étant reçus en coulissement dans lesdites rainures de guidage.

Ainsi, la transmission des efforts entre le coin et le corps s'effectue sur toute la surface des prolongements engagés dans les rainures et non plus suivant des génératrices de rouleaux, ce qui évite les inconvénients précités.

La fabrication et l'assemblage du mécanisme de commande sont également notablement simplifiés.

L'invention concerne également un frein à tambour comprenant un tel mécanisme d'actionnement.

Les détails et avantages de l'invention apparaîtront clairement à la lecture de la description qui va suivre, en se référant aux dessins annexés, dans lesquels :

la figure 1 est une vue latérale, en coupe partielle, d'un frein à tambour équipé d'un mécanisme d'actionnement selon l'invention ;

la figure 2 est une vue en coupe agrandie du mécanisme d'actionnement, suivant l'axe des pistons ; et

la figure 3 est une vue en coupe du mécanisme, prise suivant la ligne III-III à la figure 2.

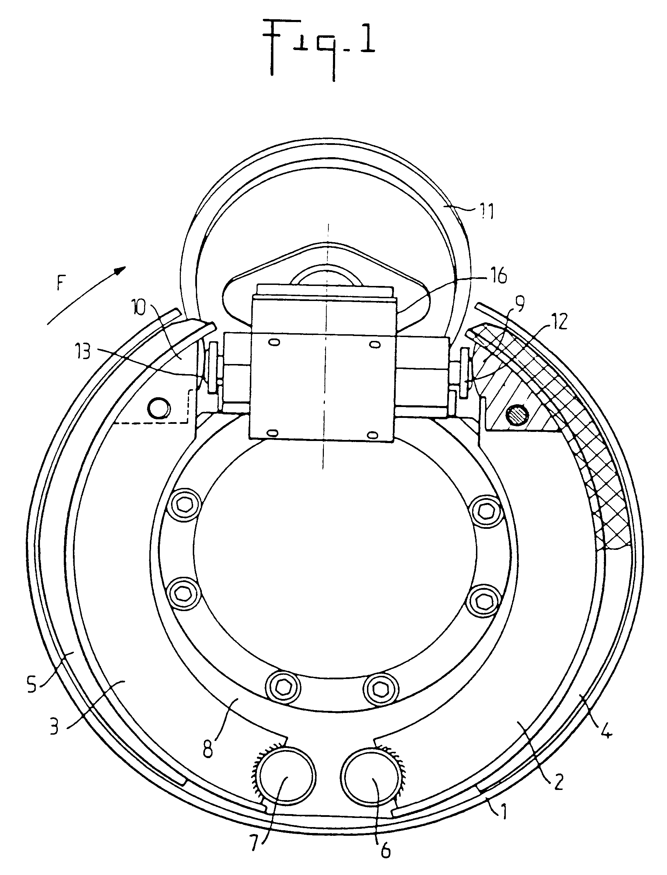

On se réfère à la figure 1 où l'on a représenté un frein à tambour équipé du mécanisme à commande par coin suivant l'invention. Le frein comprend un tambour 1 à l'intérieur duquel sont logés deux segments 2, 3 munis de garnitures 4, 5, respectivement. Les segments 2, 3 sont articulés sur des axes ou butées 6, 7 respectivement, solidaires d'un plateau 8 lui-même fixé par des boulons sur la fusée ou le pont de roue du véhicule équipé du frein suivant l'invention.

Le mécanisme d'actionnement à commande par coin suivant l'invention est installé entre les extrémités libres 9, 10 des segments 2, 3 respectivement. Ce mécanisme est enfermé dans un corps 16 lui-même solidaire de la fusée. Il comprend un coin, qui sera décrit en détail par la suite, monté sur une tige de commande elle-même déplacée par un actionneur pneumatique tel qu'un vase à diaphragme, ou encore un actionneur hydraulique, comme il est bien connue dans la technique. Le coin se déplace ainsi sur une trajectoire sensiblement transversale au sens de rotation du tambour, pour repousser progressivement des têtes de piston 12, 13 qui écartent les segments 2, 3 l'un de l'autre lors d'un freinage, de manière à plaquer les garnitures 4, 5 contre la périphérie interne du tambour, qui est alors freiné par frottement.

Lors d'un freinage, la roue et le tambour tournant dans le sens de la flèche F (Figure 1), il est clair que la garniture 5 et le segment 3 associé sont tirés par l'effet du frottement, dans le sens de cette flèche, ce qui a pour effet de faire pivoter le segment 3 vers l'intérieur autour de son axe d'articulation 7. Tout au contraire le segment "aval" 2 (par rapport à la position du coin) et la garniture 4 associée sont comprimés, également dans le sens de la flèche F, vers l'axe d'articulation 6 du segment 2, par ce même frottement de la garniture 4 contre le tambour. Quand un tel frein est équipé d'un mécanisme à commande par coin classique, dans lequel le coin peut fléchir sur son axe du fait du porte-à-faux de la tête de coin, il est clair que le coin transmet sur le piston de commande du segment "aval" l'effort qui lui est appliqué par le segment "amont" du fait de la rotation de ce dernier. Il en résulte alors un frottement plus important de la garniture du segment comprimé sur le tambour, qui conduit à une usure de cette garniture qui est plus rapide que celle du segment tendu. La fréquence des interventions d'entretien est alors liée à la vitesse d'usure de la garniture du segment comprimé.

La présente invention a pour but d'abaisser cette fréquence d'entretien par l'obtention d'une usure équilibrée des garnitures des deux segments.

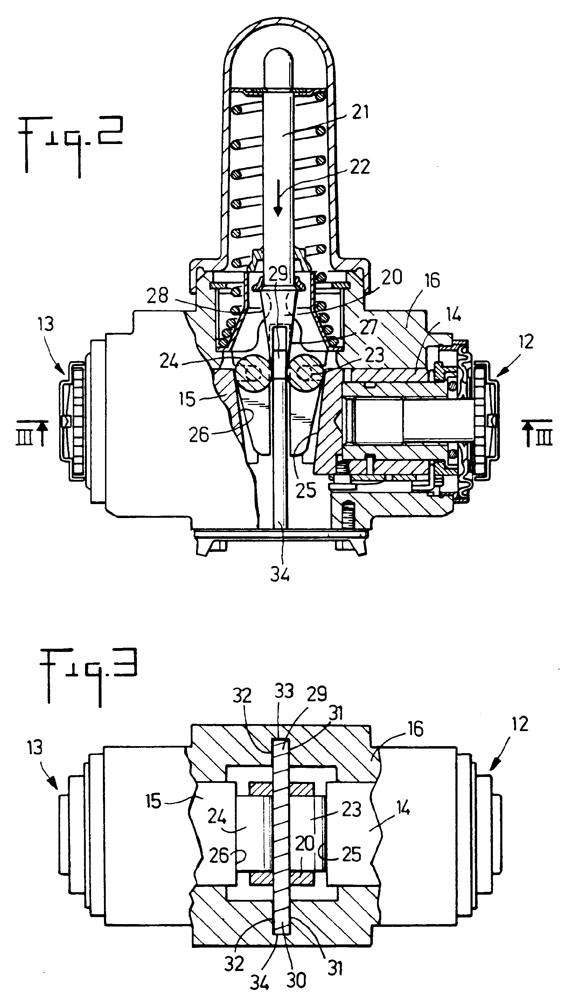

On se réfère aux figures 2 ou 3 où il est clair que le mécanisme suivant l'invention comprend un coin 20 monté par une tige de commande 21 actionnée par le vase à diaphragme 11 (Figure 1) suivant une direction 22 transversale à l'axe des têtes de piston 12, 13. Le coin 20 s'insère entre des rouleaux 23, 24 qui roulent d'une part sur des rampes 25, 26 formées à une extrémité de chacun de deux pistons 14, 15 respectivement et, d'autre part, sur des rampes coopérantes 27, 28 formées sur deux faces opposées du coin.

Quand le conducteur du véhicule appui sur la pédale de frein, le vase à diaphragme 11 repousse le coin vers le bas (du point de vue de la figure 2), ce qui a pour effet de faire progresser les rouleaux 23, 24 sur les rampes 25, 26 en les obligeant à s'écarter de l'axe du coin. Il en résulte que les pistons 14, 15 s'écartent l'un de l'autre en pressant les garnitures 4, 5 contre le tambour 1 (Figure 1). Il y a alors freinage par frottement du tambour et de la roue associée, jusqu'à l'arrêt de leur rotation, si besoin est.

Lors de ce freinage, le pivotement du segment 3 a pour effet d'appliquer un effort sur la tête de piston 13, transversal à la direction du déplacement du coin 20. Cet effort se transmet à travers le rouleau 24 et le coin 20 jusqu'au rouleau 23 qui s'appuie sur la rampe 25 du piston 14. On comprend alors que si, classiquement, aucun moyen d'équilibrage de cet effort n'est prévu, l'effort sera transmis par la tête de piston 12 au segment comprimé 2 et à sa garniture 4 dont l'usure en sera accélérée.

Suivant la présente invention, on supprime cet inconvénient en équipant le mécanisme d'actionnement de moyens d'appui qui assurent un guidage rectiligne du coin 20 pour empêcher la transmission par le coin d'un effort transversal à sa direction de déplacement, du segment tendu vers le segment comprimé.

Sur les figures 2 et 3, il apparaît que ces moyens sont constitués, d'une part, par deux prolongements latéraux 29 et 30 du coin 20, de part et d'autre des surfaces inclinées 27, 28, ces prolongements ayant des faces parallèles 31, 32 et perpendiculaires à l'axe des pistons et, d'autre part, par deux rainures 33, 34 de guidage ménagées dans le corps, recevant les prolongements latéraux du coin.

On note donc que, lors de ses déplacements, le coin 20 est constamment guidé dans les rainures 33, 34 du corps et ne peut s'écarter de sa direction de déplacement, sous l'effort transversal exercé par l'un ou l'autre segment via le piston associé.

Un tel effort est totalement compensé par une réaction égale et de sens opposé apparaissant entre les prolongements latéraux du coin et les rainures de guidage du corps. Ainsi, la compression du segment comprimé ne sera pas amplifiée par l'effort provenant du segment tendu, contrairement à ce que l'on observe dans les freins à commande par coin classique.

On notera que les prolongements seront aisément obtenus d'une seule pièce avec le coin et, après usinage, ne nécessiteront pas de traitement spécifique autres que les traitements appliqués au coin lui même.

Egalement, les rainures pourront être usinées directement dans le corps. En effet, le contact entre les prolongements et les faces internes des rainures s'effectue sur une surface d'une étendue suffisante pour que les phénomènes d'usure soient relativement faibles.

Selon variante non représentée, les rainures pourront être ménagés dans des éléments distincts rapportés dans le corps (16).

Bien entendu, l'épaisseur des prolongements sera suffisante pour éviter leur déformation par rapport au reste du coin sous l'effet des contraintes.

Dans ce qui précède, on a sous entendu que les prolongements ont essentiellement la même largeur que les rainures et prennent appui sur les deux bords de la rainure, mais il va de soi que compte tenu de la dissymétrie du frein, les rainures peuvent être plus larges que les prolongements et ces derniers ne sont en contact qu'avec une des faces de la rainure, c'est à dire celle qui est située du côté du segment comprimé.

En outre, il va de soi que l'invention couvre également des variantes dans lesquelles les prolongements sont ménagés su le corps et les rainures dans le coin, simple inversion mécanique de la solution décrite ci-avant.

## Revendications

1. Mécanisme d'actionnement de frein à tambour à commande par coin (20), comprenant un corps (16) fixe, deux pistons (14, 15) opposés coulissant dans le corps (16) et coopérant avec des extrémités (9, 10) en regard de deux segments (2, 3) portant des garnitures, un coin (20) mobile dans le corps dans une direction (22) transversale à l'axe des pistons et pourvu de deux surfaces inclinées (27, 28) coopérant avec les pistons (14, 15), caractérisé en ce que l'un des deux éléments, coin (20) ou corps (16) comporte, deux prolongements (29, 30) à faces parallèles (31, 32) et perpendiculaires à l'axe des pistons, et en ce que l'autre élément, corps (16) ou coin (20) comporte deux rainures de guidage (33, 34) perpendiculaires à l'axe du piston, les deux prolongements (29, 30) étant reçus en coulissement dans lesdits rainures de guidage.

2. Mécanisme selon la revendication 1, caractérisé en ce que les prolongements (29, 30) sont venus d'une pièce avec le coin (20).

3. Mécanisme selon la revendication 1 ou 2, caractérisé en ce que les rainures de guidage (33, 34) sont usinées directement dans le corps (16).

4. Mécanisme selon la revendication 1 ou 2, en ce que la rainures (33, 34) sont ménagées dans des éléments rapportés sur le corps (16).

5. Mécanisme selon la revendication 1, caractérisé en ce que les rainures sont ménagées dans le coin, et les prolongements sont ménagés sur le corps.

6. Mécanisme selon l'une quelconque des revendications 1 à 5, caractérisé en ce que les rainures (33, 34) ont une largeur supérieure à celle des prolongements (29, 30).

7. Frein à tambour équipé d'au moins deux segments articulés tels que, lors d'un freinage, l'un des segments soit tendu et l'autre comprimé, caractérisé en ce qu'il comprend un mécanisme conforme à l'une quelconque des revendications 1 à 6 pour actionner lesdits segments.

## Claims

1. Mechanism for actuating a drum brake controlled by a wedge (20), comprising a stationary body (16), two opposed pistons (14, 15) sliding in the body (16) and interacting with confronting ends (9, 10) of two shoes (2, 3) carrying linings, and a wedge (20) moveable in the body in a direc tion (22) transverse relative to the axis of the pistons and equipped with two inclined surfaces (27, 28) interacting with the pistons (14, 15), characterized in that one of the two elements, wedge (20) or body (16), has two extensions (29, 30) with parallel faces (31, 32) per pendicular to the axis of the pistons, and in that the other element, body (16) or wedge (20), has two guide grooves (33, 34) perpendicular to the axis of the piston, the two extensions (29, 30) being received slideably in the said guide grooves.

2. Mechanism according to Claim 1, characterized in that the extensions (29, 30) are made in one piece with the wedge (20).

3. Mechanism according to Claim 1 or 2, characterized in that the guide grooves (33, 34) are machined directly in the body (16).

4. Mechanism according to Claim 1 or 2, characterized in that the grooves (33, 34) are made in elements attached to the body (16).

5. Mechanism according to Claim 1, characterized in that the grooves are made in the wedge, and the extensions are made on the body.

6. Mechanism according to any of Claims 1 to 5, characterized in that the grooves (33, 34) have a width greater than that of the extensions (29, 30).

7. Drum brake equipped with at least two articulated shoes which are such that, during braking, one of the shoes is tensioned and the other compressed, characterized in that it comprises a mechanism according to any of Claims 1 to 6 for actuating the said shoes.

## Patentansprüche

1. Betätigungsmechanismus für keilgesteuerte (20) Trommelbremse, mit einem festen Körper (16), zwei Kolben (14, 15), die im Körper (16) in entgegengesetzter Richtung verschoben werden und mit den Enden (9, 10) zweier jeweils gegenüberliegender und Bremsbeläge tragender Segmente (2, 3) zusammenwirken, einem Keil (20), der im Körper in einer Richtung (22) quer zur Mittelachse des Kolbens beweglich ist und mit zwei mit dem Kolben (14, 15) zusammenwirkenden schrägen Flächen versehen ist, dadurch gekennzeichnet, daß eines der zwei Elemente, Keil (20) oder Körper (16), zwei Fortsätze (29, 30) mit parallelen und zur Mittelachse des Kolbens senkrechten Flächen (31, 32) aufweist, und daß das andere Element, Körper (16) oder Keil (20), zwei zur Mittelachse des Kolbens senkrechte Führungsrillen (33, 34) aufweist, wobei die Fortsätze (29, 30) von den Führungsrillen verschiebbar aufgenommen werden.

2. Mechanismus gemäß Anspruch 1, dadurch gekennzeichnet, daß die Fortsätze (29, 30) mit dem Keil (20) aus einem Stück gebildet sind.

3. Mechanismus gemäß Anspruch 1 oder 2, dadurch gekennzeichnet, daß die Führungsrillen (33, 34) direkt im Körper (16) ausgebildet werden.

4. Mechanismus gemäß Anspruch 1 oder 2, dadurch gekennzeichnet, daß die Rillen (33, 34) in am Körper (16) angesetzten Elementen ausgespart sind.

5. Mechanismus gemäß Anspruch 1, dadurch gekennzeichnet, daß die Rillen im Keil und die Fortsätze im Körper ausgespart sind.

6. Mechanismus gemäß einem der Ansprüche 1 bis 5, dadurch gekennzeichnet, daß die Rillen (33, 34) eine Länge besitzen, die größer als diejenige der Fortsätze (29, 30) ist.

7. Trommelbremse, die mit wenigstens zwei schwenkbaren Segmenten ausgerüstet ist, derart, daß bei einem Bremsvorgang auf eines der Segmente ein Zug und auf das andere ein Druck ausgeübt wird, dadurch gekennzeichnet, daß sie einen Mechanismus gemäß einem der Ansprüche 1 bis 6 zum Betätigen der Segmente umfaßt.

# Fig. 1

Fig.2

Fig.3